# EUROPÄISCHE PATENTSCHRIFT

(11) **EP 2 230 500 B1**
(45) Veröffentlichungstag und Bekanntmachung des Hinweises auf die Patenterteilung: **31.08.2011**
(21) Anmeldenummer: 09003785.4
(22) Anmeldetag: 16.03.2009
(51) Int. Cl.: G01K 17/06

(54) **Heizkostenverteiler mit Infrarot-Temperatursensor**
Heating cost distributer with infrared temperature sensor
Répartiteur de coûts de chauffage doté d'un capteur de température infrarouge

(43) Veröffentlichungstag der Anmeldung: 22.09.2010
(73) Patentinhaber: BFW WERNER VOELK GMBH, 82166 Gräfelfing (DE)
(72) Erfinder: Haupt, Christian, 82166 Gräfelfing (DE); Ruhland, Michael, 78337 Öhningen (DE)
(74) Vertreter: Grünecker, Kinkeldey, Stockmair & Schwanhäusser Anwaltssozietät

(56) Entgegenhaltungen:
- EP-A- 1 605 238
- EP-A1- 0 829 708
- DE-U1-202005 011 517
- US-A- 5 646 858

## Beschreibung

### Gebiet der Erfindung

Die vorliegende Erfindung betrifft einen Heizkostenverteiler zur Erfassung von Verbrauchswerten eines Heizkörpers.

### Hintergrund der Erfindung

Zur Erfassung von Wärmeverbrauchswerten von Heizkörpern finden herkömmlicherweise Heizkostenverteiler Verwendung. Je nach Ausführungsart erfassen die Heizkostenverteiler entweder nur eine heizkörperseitige Temperatur (Einfühlergeräte) oder als Zweifühlergeräte eine heizkörperseitige und eine raumluftseitige Temperatur. Beispielsweise umfassen sie zwei Temperaturfühler, die übereinander in einem Gehäuse an einem Heizkörper in wärmeleitender Verbindung mit demselben angebracht werden und können die von dem Heizkörper abgegebene Wärme mit Hilfe einer Auswerteschaltung unter Verwendung einer Heizkörperkennlinie bzw. einer Heizkörperkennlinienschar berechnen. Im Einzelnen kommen im Stand der Technik Thermistoren-, Halbleiter- oder Quarzschwinger-Sensoren zur Temperaturmessung zum Einsatz. Diese Temperaturfühler messen heizkörperseitig entweder direkt die Oberflächentemperatur eines metallischen Rückteils, auf dem der Heizkostenverteiler montiert ist oder indirekt über einen kontaktführenden Wärmeleitgummi oder eine Wärmeleithülse die Oberflächentemperatur des Rückteils.

In der EP 0 829 708 A1 wird ein mobiles System zum Erfassen eines Heizwärmeverbrauchs basierend auf einem herkömmlichen Heizkostenverteiler beschrieben. Das mobile System erlaubt das Ablesen der Ampullen der Heizkostenverteiler sowie die Neubefüllung der Ampullen.

Idealerweise sollte ein Heizkostenverteiler die Mitteltemperatur (Temperatur auf mittlerer Bauhöhe) des Heizkörpers zur korrekten Ermittlung der Wärmeabgabe bestimmen. Da dieses konstruktiv nicht möglich ist, wird die mittlerer Wassertemperatur des Heizkörpers aus der gemessenen Oberflächentemperatur des Rückteils und der gemessenen Lufttemperatur sowie unter Berücksichtigung des so genannten c-Werts ermittelt. Dieser c-Wert misst die Abweichung der gemessenen Temperatur von der wirklichen Mitteltemperatur und ist je nach Konstruktion des Heizkostenverteilers und somit der Anordnung und Anbindung seiner Temperatursensoren unterschiedlich.

Während also einerseits unterschiedliche Heizkostenverteiler an demselben Heizkörper unterschiedliche c-Werte aufweisen, ergeben sich auch unterschiedliche c-Werte für dieselbe Heizkostenverteilerart bei Verwendung an verschiedenen Heizkörperarten. Zudem führt die genaue Gestaltung des wärmeleitenden Rückteils und die Art der Montage des Heizkostenverteiler an dem Heizkörper bei unterschiedlichen Heizkörpern in der Praxis zu variierenden c-Werten. So werden nach Selbstauskunft eines Anwenders von Heizkostenverteilern für rund 6000 Heizkörperarten 125000 Dateneinträge in einer c-Wert-Datenbank benötigt.

Zur Ermittlung der c-Werte müssen die verschiedenen Heizkostenverteiler und Heizkörper unter definierten Bedingungen betrieben werden. Der Aufwand und die Kosten hierfür sind bei der Vielzahl bereits montierter Heizkörper sowie der kontinuierlich neu auf den Markt kommenden Heizflächen wie auch Heizkostenverteiler immens.

Der vorliegenden Erfindung liegt somit die Aufgabe zugrunde, die Verlässlichkeit und Wirtschaftlichkeit der Erfassung der Verbrauchsdaten eines Heizungssystems zu verbessern.

### Beschreibung der Erfindung

Die oben genannte Aufgabe wird durch eine Vorrichtung nach Anspruch 1 gelöst. Gemäß Anspruch 1 wird ein Heizkostenverteiler für die Montage an einem Heizkörper, der zumindest eine Strahlungsthermometervorrichtung, insbesondere eine Infrarot (IR)-Temperatursensorvorrichtung (IR-Pyrometer) umfasst, zur Verfügung gestellt. Im Weiteren wird aufgrund der involvierten Temperaturen zumeist von einer Infrarot (IR)-Temperatursensorvorrichtung (IR-Pyrometer) die Rede sein. Der Infrarot-Temperatursensor erlaubt eine berührungsfreie Messung der Wärmestrahlung des Heizkörpers in wohldefinierten Sensorbereichen, insbesondere Bereichen des wasserdurchflossenen Rohr eines Heizkörpers, beispielsweise eines Konvektors. Für die von Heizkörpern erreichten Temperaturen sind Infrarot-Temperatursensor besonders geeignet, die im mittleren Infrarot-Wellenlängenbereich arbeiten, d.h. von ca. 1 µm bis ca. 100 µm, bevorzugt von 2,5 µm bis 50 µm. Ein Sensor zur kontaktfreien Temperaturmessung über die von einem zu messenden Objekt ausgestrahlte Wärmestrahlung, der in anderen als infraroten Wellenlängenbereichen arbeitet, kann jedoch alternativ in jeder hier beschriebenen Weiterbildung erfindungsgemäß eingesetzt werden. In diesem Zusammenhang sei erwähnt, dass die Wahl eines in einem bestimmten Wellenlängenbereich arbeitenden Pyrometers gemäß dem Emissionsgrad eines jeweiligen Messpunkts auf einem zu vermessenden Heizkörper erfolgen kann (s. auch Beschreibung unten).

Der Infrarot-Temperatursensor arbeitet prinzipiell verschleißfrei und es können keine Fehlmessungen aufgrund eines mangelhaften Wärmekontakts, wie sie bei herkömmlichen Heizkostenverteilern mit Wärmekontakten und -leitern beispielsweise in Form von Wärmeleitgummis auftreten können, zur falschen Ermittlung von Verbrauchswerten führen.

Die Problematik der Temperaturmessstrecke "Heizkörper - Montagerückteil - Wärmeleitgummi - heizköperseitiger Sensor" wird erfindungsgemäß auf die Temperaturmessstrecke "Heizkörper - heizköperseitiger Sensor" reduziert. Hierdurch wird der Vorteil bereitgestellt, dass der c-Wert nicht wie im Stand der Technik von einer Kombination von Heizkörper und wärmeleitenden Montagerückteil abhängt. Vielmehr ist erfindungsgemäß lediglich die Oberflächentemperatur direkt an einem Messpunkt des Heizkörpers zu ermitteln. Die herkömmlicherweise notwendige Vielzahl an unterschiedlichen c-Wert-Messungen kann daher deutlich reduziert werden und die c-Wert-Messvorgänge können vereinfacht werden, da nur die tatsächliche Oberflächentemperatur an einer oder mehreren wohldefinierten Stellen zu messen ist.

Weiterhin ist zu beachten, dass es eine Mehrzahl an bereits verbauten Heizkörpern gibt, die in Deutschland nicht mit herkömmlichen Heizkostenverteilern ausgestattet werden dürfen, da der DIN EN 834 nicht genügt werden kann. Für diese bereits verbauten Heizkörper unterbindet die genannte Norm aufgrund zu großer c-Werte, die beispielsweise durch einen hohen thermischen Widerstand bedingt sind, die Verwendung von herkömmlichen Heizkostenverteilern. Der Einsatz des hier offenbarten Heizkostenverteilers mit einem Infrarot-Temperatursensor entschärft somit die genannte Problematik bei der gesetzlich vorgeschriebenen verbrauchsabhängigen Heizkostenabrechnung. Er wird also durch die Verwendung eines Infrarot-Temperatursensors oder eines in einem von dem infraroten verschiedenen Wellenbereich arbeitenden Strahlungsthermometer anstelle der herkömmlichen auf Wärmeleitung statt Wärmestrahlung basierenden Temperatursensoren nicht nur die Messgenauigkeit erhöht, sondern auch die Anzahl der normgemäß ausstattbaren Heizkörper.

Die Infrarot-Temperatursensorvorrichtung kann insbesondere eine Mehrpunktsensorvorrichtung sein, die einen oder mehrere Messpunkttemperaturen des Heizkörpers und die Umgebungstemperatur (Raumlufttemperatur) ermittelt. Insbesondere kann die Infrarot-Temperatursensorvorrichtung dazu ausgebildet sein, mit zwei Sensoren an zwei oder mehr verschiedenen Messpunkten auf dem Heizkörper gleichzeitig die Temperatur zu ermitteln. Unter den Begriff "Messpunkt", wie er in der vorliegenden Anmeldung verwendet wird, fällt ein Messbereich endlicher Ausdehnung.

Durch das Vorsehen der gleichzeitigen Messung an zumindest zwei Messpunkten (Messbereichen) lässt sich auf einfache und zuverlässige Weise ein Temperaturgradient über die Heizkörperbauhöhe oder über einen vorbestimmten Teil derselben bestimmen. Dieses ist bei herkömmlichen Heizkostenverteilern, wenn überhaupt, nur sehr eingeschränkt möglich. Insbesondere kann erfindungsgemäß der Temperaturgradient über eine Strecke entlang der Heizkörperbauhöhe ermittelt werden, die größer als die Längsabmessung (entlang der Heizkörperbauhöhe) des Heizkostenverteilers bzw. des Gehäuses desselben ist. In der Tat ermöglicht die kontaktfreie Temperaturmessung durch die Infrarot-Temperatursensorvorrichtung prinzipiell die Bestimmung eines Temperaturgradienten entlang einer beliebigen Strecke des Heizkörpers. Durch Vergleich der ermittelten Temperatur an den Messpunkten auf dem Heizkörper mit der ermittelten Umgebungstemperatur lässt sich die Übertemperatur des Heizkörper bezüglich der Umgebung (Temperatur oberhalb der Umgebungstemperatur) und somit die von dem Heizkörper abgegebene Wärmeleistung zuverlässig bestimmen.

Der Heizkostenverteiler kann weiterhin eine Speichereinrichtung umfassen, in der ein Kennlinienfeld gespeichert ist, und er kann in diesem Fall dazu ausgebildet sein, einen Temperaturgradienten entlang der Bauhöhe des Heizkörpers zu bestimmen und auf der Grundlage des gespeicherten Kennlinienfelds und des bestimmten Temperaturgradienten die Position der tatsächlichen mittleren Temperatur auf dem Heizkörper zu schätzen. Durch Vergleich der ermittelten Temperatur an den Messpunkten auf dem Heizkörper mit der ermittelten Umgebungstemperatur lässt sich die Übertemperatur des Heizkörper bezüglich der Umgebung und somit die von dem Heizkörper abgegebene Wärmeleistung zuverlässig bestimmen. Die tatsächliche mittlere Temperatur des Heizkörpers kann auf der Grundlage des gespeicherten Kennlinienfelds und des bestimmten Temperaturgradienten mit im Stand der Technik nicht erreichter Genauigkeit geschätzt werden.

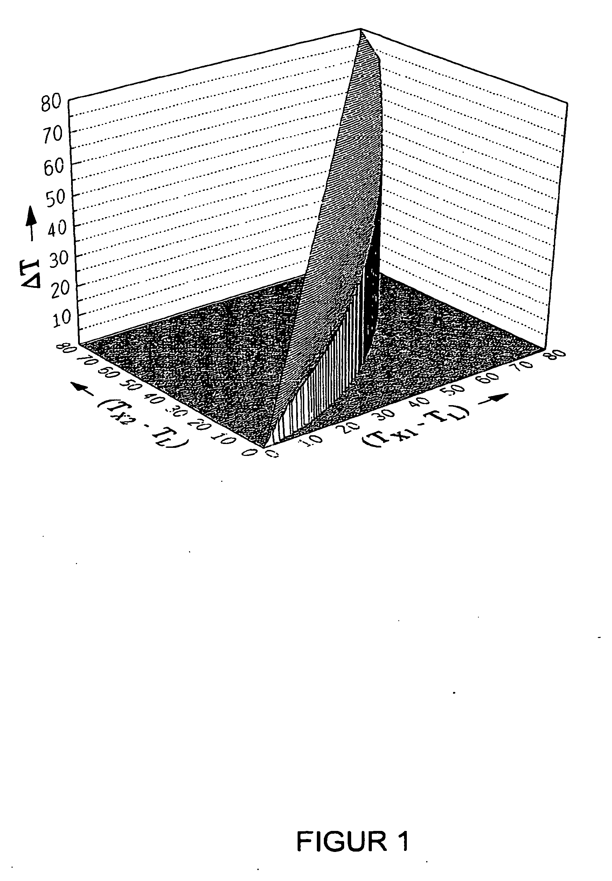

Das oben genannte Kennlinienfeld kann analytisch/numerisch modelliert werden oder durch Normmessungen bestimmt werden und anschließend in einem Speicher des Heizkostenverteilers hinterlegt werden. Alternativ kann das Kennlinienfeld extern in einem Computersystem gespeichert sein und zur kalibrierten Auswertung der von dem Heizkostenverteiler gelieferten Daten verwendet werden. In Figur 1 ist beispielhaft ein dreidimensionales Kennlinienfeld zur Bestimmung der Heizkörperübertemperatur ΔT als Funktion des Differenz der an einem ersten Messpunkt eines Heizkörpers gemessenen Temperatur und der Umgebungs - (Luft - ) Temperatur Tₓ₁ - T_{L} und der Differenz der an einem zweiten Messpunkt eines Heizkörpers gemessenen Temperatur und der Umgebungs - (Luft -) Temperatur Tₓ₂ - T_{L} veranschaulicht.

Insbesondere kann der Heizkostenverteiler auch dazu ausgebildet sein, einen Infrarot-Temperatursensor (oder ein nicht im infraroten Wellenlängenbereich arbeitendes Pyrometer) zu der mithilfe des ermittelten Temperaturgradienten und des Kennlinienfelds geschätzten Position auf dem Heizkörper der tatsächlichen mittleren Temperatur zu richten, so dass er die Temperatur genau an dieser Position (in diesem Bereich) ermitteln kann. In Verbindung mit der von der Infrarot-Temperatursensorvorrichtung gemessenen Umgebungstemperatur lässt sich so die aktuelle Wärmeleistung eines Heizkörpers, an dem der erfindungsgemäße Heizkostenverteiler angebracht ist, genau ermitteln, wodurch sich die Genauigkeit der ermittelten Verbrauchswerte im Vergleich zu herkömmlichen Heizkostenverteilern signifikant verbessern lässt.

Der Heizkostenverteiler der vorliegenden Erfindung lässt sich auch in Form eines Fernfühlergeräts ausbilden. In dieser Weiterbildung wird ein Hauptgehäuse des Heizkostenverteilers nicht an oder in unmittelbarer Nähe zu dem Ort montiert, an dem die Temperatur des Heizkörpers ermittelt werden soll, sondern er wird an einem Ort montiert, der aus Gründen des Montagedesigns oder der Zugänglichkeit, etc. ausgewählt wird. Es wird somit die Wahlfreiheit bei der Montage deutlich erhöht. So umfasst der erfindungsgemäße Heizkostenverteiler in einem Beispiel ein Hauptgehäuse mit einem Infrarot-Temperatursensor zur Bestimmung der Umgebungstemperatur und mit zumindest einem weiteren Infrarot-Temperatursensor außerhalb des Hauptgehäuses, der dazu ausgebildet ist, an einem vorbestimmten Messpunkt die Temperatur des Heizkörpers zu messen, wobei eine (uni- oder bidirektionale) Verbindung zwischen dem Hauptgehäuse und dem zumindest einen weiteren Infrarot-Temperatursensor über ein elektrisches Kabel.und/oder eine Funkstrecke besteht.

In einem derart ausgebildeten Heizkostenverteiler kann sich in dem Hauptgehäuse ein Infrarot-Temperatursensor befinden, der dazu ausgebildet ist, an einem weiteren Messpunkt auf dem Heizkörper die Temperatur des Heizkörpers zu messen. Somit kann insbesondere bei waagerecht vom Heizungswasser durchströmten Heizkörpern, wie Konvektoren, die Übertemperatur des Heizkörpers an zwei deutlich beabstandeten Stellen (Messpunkten) gemessen werden und daraus die mittlere tatsächliche (Über- )Temperatur bestimmt werden. Der horizontale Abstand der Messpunkte ist nicht festgelegt und kann insbesondere größer als die Linearabmessung des Hauptgehäuses sein; der horizontale Abstand kann beispielsweise 10% - 90% der horizontalen Abmessung des Konvektors betragen.

Auch kann vorgesehen werden, dass der Heizkostenverteiler mit einem ersten Nebengehäuse mit einem ersten weiteren Infrarot-Temperatursensor außerhalb des Hauptgehäuses und mit einem zweiten Nebengehäuse mit einem zweiten weiteren Infrarot-Temperatursensor außerhalb des Hauptgehäuses ausgestattet wird, wobei der erste und der zweite Infrarot-Temperatursensor mit dem Hauptgehäuse über ein elektrisches Kabel und/oder eine Funkstrecke in Verbindung stehen. So kann beispielsweise bei einem Konvektor auf dem wasserführenden Rohr an zwei Stellen je ein Fernfühler montiert werden und das Hauptgehäuse auf der Außenseite der den Konvektor umgebenden Abdeckhaube befestigt werden. Dadurch wird sichergestellt, dass die bestimmte Raumlufttemperatur nicht durch eine von dem Heizkörper ausgehende Wärmekonvention verfälscht wird.

In einer weiteren Ausbildung kann auch ein Pyrometer, wie ein Infrarot-Temperatursensor, nur in dem Hauptgehäuse vorgesehen werden, während in dem ersten und zweiten Nebengehäuse jeweils ein herkömmlich verwendeter auf Wärmeleitung basierender Temperaturfühler, beispielsweise mit einem Thermistoren-, Halbleiter-oder Quarzschwinger-Sensor, zur Temperaturmessung angeordnet ist.

Da die Temperaturbestimmung mithilfe eines Strahlungsthermometers von der Emissionsfähigkeit des zu messenden Objekts abhängt, kann es wünschenswert sein, den hierin offenbarten Heizkostenverteiler mit einer Möglichkeit der Kalibrierung auf den Emissionsgrad des Materials des zu messenden Heizkörpers an der Messstelle zu versehen. Die zumindest eine Strahlungsthermometervorrichtung, insbesondere die Infrarot-Temperatursensorvorrichtung, kann somit eine Emissionsgradkorrektureinrichtung (beispielsweise in Form eines Potentiometers) aufweisen, die dazu ausgebildet ist, eine Kalibrierung der Strahlungsthermometervorrichtung auf den Emissionsgrad eines zu messenden Messpunkts des Heizkörpers zu ermöglichen.

Es sei noch erwähnt, dass der Heizkostenverteiler der vorliegenden Erfindung mit einem Funksender gemäß dem Stand der Technik ausgestattet sein kann, der beispielsweise GSM- oder ISM-Bänder nutzen kann. Über den Funksender können von dem Heizkostenverteiler ermittelte Daten and eine fest montierte Sammelstelle oder ein mobiles Funkauslesegerät übermittelt werden. Eine Verwendung der Bluetooth-Technologie ist ebenfalls möglich.

Außerdem gewährt der Heizkostenverteiler der vorliegenden Erfindung eine deutliche größere Freiheit in dem Design des Heizkörpers wie des Heizkostenverteilers und in der Montageposition des Heizkostenverteilers. So kann dieser insbesondere an der Seite des Heizkörpers, wo er weniger deutlich vom Raum aus sichtbar ist, in dem der Heizkörper montiert ist, angebracht werden. Es wird ein Verfahren zum Bestimmen der Wärmeleistung eines Heizkörpers bereitgestellt, das die Schritte umfasst

Bereitstellen eines Heizkostenverteilers, der eine Infrarot-Temperatursensorvorrichtung oder eine in einem anderen Wellenlängenbereich arbeitende Strahlungstemperatursensorvorrichtung umfasst;

### Bereitstellen eines Kennlinienfelds;

Befestigen des bereitgestellten Heizkostenverteilers (beispielsweise seitlich) an dem Heizkörper, insbesondere in dem Bereich von 40% und 75%, bevorzugt in dem Bereich von 45% bis 55% der Bauhöhe des Heizkörpers,

Ermitteln der Temperatur des Heizkörpers an zumindest zwei Messpunkten mithilfe der Infrarot-Temperatursensorvorrichtung oder anderen Strahlungstemperatursensorvorrichtung des bereitgestellten Heizkostenverteilers;

Ermitteln der Umgebungstemperatur mithilfe der Infrarot-Temperatursensorvorrichtung oder anderen Strahlungstemperatursensorvorrichtung des bereitgestellten Heizkostenverteilers; und

Bestimmen der tatsächlichen Übertemperatur des Heizkörpers auf der Grundlage der an den zumindest zwei Messpunkten ermittelten Temperatur und der ermittelten Umgebungstemperatur sowie des bereitgestellten Kennlinienfelds.

Das Verfahren kann weiterhin das Präparieren der zumindest zwei Messpunkte auf dem Heizkörper durch Schleifen entsprechender Punkte auf dem Heizkörper und/oder Bereitstellen einer Folie mit vorbestimmten wohldefinierten Wärmestrahlungs-Emissionseigenschaften zumindest auf den zumindest zwei Messpunkten umfassen. Die Strahlungsthermometervorrichtung kann auf den Emissionsgrad der zu messenden Messpunkte, insbesondere der wie genannt vorbehandelten Messpunkte, kalibriert werden. Somit lässt sich die Temperaturbestimmung im tatsächlichen Betrieb mit höchster Genauigkeit durchführen.

Insbesondere kann in dem erfindungsgemäßen Verfahren gemäß obiger Beispiele einer Infrarot-Temperatursensorvorrichtung, die in einem Hauptgehäuse des Heizkostenverteilers vorgesehen ist, und einer weiteren Infrarot-Temperatursensorvorrichtung, die in einer Fernkomponente vorgesehen ist, die mit dem Hauptgehäuse in Verbindung steht, an zwei horizontal beabstandeten Stellen die Temperatur eines Konvektor-Heizkörpers gemessen wird.

Die verwendete Infrarot-Temperatursensorvorrichtung kann erfindungsgemäß einen bolometrischen oder pyroelektrischen Strahlungssensor umfassen. Wie es bereits erwähnt wurde, kann nach Wahl statt einer Infrarot-Temperatursensorvorrichtung eine Strahlungsthermometervorrichtung Verwendung finden, die nicht im Infrarotbereich, sondern beispielsweise im Fall blankpolierter Metallmesspunkte im ultravioletten Wellenlängenbereich (Wellenlängen von ca. 1 nm bis ca. 800 nm) arbeitet.

## Patentansprüche

1. Heizkostenverteiler für die Montage an einem Heizkörper, der Heizkostenverteiler zumindest eine Strahlungsthermometervorrichtung, insbesondere eine Infrarot-Temperatursensorvorrichtung, umfasst
**dadurch gekennzeichnet, dass**
die zumindest eine Strahlungsthermometervorrichtung dazu ausgebildet ist, die Temperatur an zumindest einem Messpunkt auf dem Heizkörper, insbesondere an zwei Messpunkten auf dem Heizkörper, und die Temperatur der Raumluft zu ermitteln, und der Heizkostenverteiler dazu ausgebildet ist, durch Vergleich der ermittelten Temperatur an dem zumindest einem Messpunkt auf dem Heizkörper und der ermittelten Temperatur der Raumluft die Übertemperatur des Heizkörpers zu bestimmten.

2. Der Heizkostenverteiler gemäß Anspruch 1, der weiterhin eine Speichereinrichtung umfasst, in der ein Kennlinienfeld gespeichert ist, und der dazu ausgebildet ist, einen Temperaturgradienten entlang der Bauhöhe des Heizkörpers zu bestimmen und auf der Grundlage des gespeicherten Kennlinienfelds und des bestimmten Temperaturgradienten die Position auf dem Heizkörper der tatsächlichen mittleren Temperatur zu schätzen.

3. Der Heizkostenverteiler gemäß Anspruch 2, der weiterhin dazu ausgebildet ist, einen Infrarot-Temperatursensor zu der geschätzten Position auf dem Heizkörper der tatsächlichen mittleren Temperatur zu richten, so dass er die Temperatur an dieser Position ermitteln kann.

4. Der Heizkostenverteiler gemäß einem der Ansprüche 1 bis 3, der dazu ausgebildet ist, die tatsächliche mittlere Temperatur des Heizkörpers auf der Grundlage des gespeicherten Kennlinienfelds und des bestimmten Temperaturgradienten zu schätzen.

5. Der Heizkostenverteiler gemäß einem der Ansprüche 1 bis 4, ein Hauptgehäuse mit einem Infrarot-Temperatursensor zur Bestimmung der Umgebungstemperatur umfassend und mit zumindest einem weiteren Infrarot-Temperatursensor außerhalb des Hauptgehäuses, der dazu ausgebildet ist, an einem Messpunkt die Temperatur des Heizkörpers zu messen, wobei eine Verbindung zwischen dem Hauptgehäuse und dem zumindest einen weiteren Infrarot-Temperatursensor über ein elektrisches Kabel und/oder eine Funkstrecke besteht.

6. Der Heizkostenverteiler gemäß Anspruch 5, in dem sich in dem Hauptgehäuse ein Infrarot-Temperatursensor befindet, der dazu ausgebildet ist, an einem weiteren Messpunkt die Temperatur des Heizkörpers zu messen.

7. Der Heizkostenverteiler gemäß Anspruch 5 oder 6, mit einem ersten Nebengehäuse mit einem ersten weiteren Infrarot-Temperatursensor außerhalb des Hauptgehäuses und mit einem zweiten Nebengehäuse mit einem zweiten weiteren Infrarot-Temperatursensor außerhalb des Hauptgehäuses, wobei der erste und der zweite Infrarot-Temperatursensor mit dem Hauptgehäuse über ein elektrisches Kabel und/oder eine Funkstrecke in Verbindung stehen.

8. Der Heizkostenverteiler gemäß Anspruch 5 oder 6, mit
einem ersten Nebengehäuse mit einem ersten Temperaturfühler außerhalb des Hauptgehäuses, insbesondere einen Thermistoren-, Halbleiter- oder Quarzschwinger-Sensor umfassend, und mit
einem zweiten Nebengehäuse mit einem zweiten Temperaturfühler außerhalb des Hauptgehäuses, insbesondere einen Thermistoren-, Halbleiter- oder Quarzschwinger-Sensor umfassend, und wobei
der erste und der zweite Temperaturfühler mit dem Hauptgehäuse über ein elektrisches Kabel und/oder eine Funkstrecke in Verbindung stehen.

9. Verfahren zum Bestimmen der Wärmeleistung eines Heizkörpers, die Schritte umfassend
Bereitstellen eines Heizkostenverteilers;
Bereitstellen eines Kennlinienfelds;
Befestigen des bereitgestellten Heizkostenverteilers an dem Heizkörper, insbesondere in dem Bereich von 40% und 75%, bevorzugt in dem Bereich von 45% bis 55% der Bauhöhe des Heizkörpers,
**dadurch gekennzeichnet, dass**
der Heizkostenverteiler eine Strahlungsthermometervorrichtung, insbesondere eine Infrarot-Temperatursensorvorrichtung, umfasst;
und durch die Schritte
Ermitteln der Temperatur des Heizkörpers an zumindest zwei Messpunkten mithilfe der Strahlungsthermometervorrichtung des bereitgestellten Heizkostenverteilers;
Ermitteln der Umgebungstemperatur mithilfe der Strahlungsthermometervorrichtung des bereitgestellten Heizkostenverteilers; und
Bestimmen der Übertemperatur des Heizkörpers auf der Grundlage der an den zumindest zwei Messpunkten ermittelten Temperatur und der ermittelten Umgebungstemperatur sowie des bereitgestellten Kennlinienfelds.

10. Das Verfahren gemäß Anspruch 9 weiterhin das Präparieren der zumindest zwei Messpunkte auf dem Heizkörper durch Schleifen entsprechender Punkte auf dem Heizkörper und/oder Bereitstellen einer Folie vorbestimmter Emissionseigenschaften zumindest auf den zumindest zwei Messpunkten umfassend.

11. Das Verfahren gemäß Anspruch 9 oder 10, in dem mithilfe einer Infrarot-Temperatursensorvorrichtung, die in einem Hauptgehäuse des Heizkostenverteilers vorgesehen ist, und einer weiteren Infrarot-Temperatursensorvorrichtung, die in einer Femkomponente vorgesehen ist, die mit dem Hauptgehäuse in Verbindung steht, an zwei horizontal beabstandeten Stellen die Temperatur eines Konvektor-Heizkörpers gemessen wird.

12. Das Verfahren gemäß einem der Ansprüche 9 bis 11 in dem die Strahlungsthermometervorrichtung auf den Emissionsgrad der zu messenden Messpunkte kalibriert wird.

## Claims

1. Heating cost distributor for mounting on a heating unit, the heating cost distributor comprising at least one radiation thermometer device, in particular an infrared temperature sensor device,
**characterised in that**
the at least one radiation thermometer device is configured to detect the temperature at at least one measuring point on the heating unit, in particular at two measuring points on the heating unit, and the temperature of the ambient air, and the heating cost distributor is configured to determine the excess temperature of the heating unit by comparing the detected temperature at the at least one measuring point on the heating unit and the detected temperature of the ambient air.

2. Heating cost distributor according to claim 1, which further comprises a memory means in which a curve family is stored and which is configured to determine a temperature gradient along the overall height of the heating unit and to estimate the position on the heating unit of the actual mean temperature on the basis of the stored curve family and the determined temperature gradient.

3. Heating cost distributor according to claim 2, which is further configured to direct an infrared temperature sensor towards the estimated position on the heating unit of the actual mean temperature, in such a way that it can detect the temperature at this position.

4. Heating cost distributor according to any one of claims 1 to 3, which is configured to estimate the actual mean temperature of the heating unit on the basis of the stored curve family and the determined temperature gradient.

5. Heating cost distributor according to any one of claims 1 to 4, comprising a main housing having an infrared temperature sensor for determining the ambient temperature and comprising at least one further infrared temperature sensor outside the main housing, which is configured to measure the temperature of the heating unit at one measuring point, wherein a connection between the main housing and the at least one further infrared temperature sensor is provided via an electric cable and/or a radio link.

6. Heating cost distributor according to claim 5, in which an infrared temperature sensor, which is configured to measure the temperature of the heating unit at a further measuring point, is located inside the main housing.

7. Heating cost distributor according to either claim 5 or claim 6, comprising a first additional housing comprising a first further infrared temperature sensor outside the main housing and comprising a second additional housing comprising a second further infrared temperature sensor outside the main housing, wherein the first and second infrared temperature sensors are connected to the main housing via an electric cable and/or a radio link.

8. Heating cost distributor according to either claim 5 or claim 6, comprising
a first additional housing comprising a first temperature probe outside the main housing, in particular comprising a thermistor sensor, semiconductor sensor or quartz oscillator sensor, and comprising
a second additional housing comprising a second temperature probe outside the main housing, in particular comprising a thermistor sensor, semiconductor sensor or quartz oscillator sensor, and wherein
the first and the second temperature probes are connected to the main housing via an electric cable and/or a radio link.

9. Method for determining the thermal output of the heating unit, comprising the steps of:
providing a heating cost distributor;
providing a curve family;
fixing the provided heating cost distributor to the heating unit, in particular in the region of 40 % and 75 %, preferably in the region of 45 % to 55 % of the overall height of the heating unit, **characterised in that**
the heating cost distributor comprises a radiation thermometer device, in particular an infrared temperature sensor device;
and by the steps of
detecting the temperature of the heating unit at at least two measuring points using the radiation thermometer device of the heating cost distributor provided;
detecting the ambient temperature using the radiation thermometer device of the heating cost distributor provided; and
determining the excess temperature of the heating unit on the basis of the temperature detected at the at least two measuring points and the detected ambient temperature as well as the curve family provided.

10. Method according to claim 9, further comprising the step of preparing the at least two measuring points on the heating unit by grinding corresponding points on the heating unit and/or providing a foil having predetermined emission properties at least on the at least two measuring points.

11. Method according to either claim 9 or claim 10, in which the temperature of a convector heating unit is measured at two positions with horizontal spacing using an infrared temperature sensor device which is provided in a main housing of the heating cost distributor and a further infrared temperature sensor device which is provided in a remote component connected to the main housing.

12. Method according to any one of claims 9 to 11, in which the radiation thermometer device is calibrated to the emissivity of the measuring points to be measured.

## Revendications

1. Répartiteur de coûts de chauffage à monter sur un corps de chauffe, le répartiteur de coûts de chauffage comprend au moins un dispositif à thermomètre à rayonnement, en particulier un dispositif à capteur de température infrarouge,
**caractérisé en ce que** le ou les dispositifs à thermomètre à rayonnement sont conçus pour déterminer la température au niveau d'au moins un point de mesure sur le corps de chauffe, en particulier au niveau de deux points de mesure sur le corps de chauffe, ainsi que la température de l'air ambiant, et le répartiteur de coûts de chauffage est conçu pour définir la surchauffe du corps de chauffe en comparant la température déterminée au niveau du ou des points de mesure sur le corps de chauffe et la température déterminée de l'air ambiant.

2. Répartiteur de coûts de chauffage selon la revendication 1, qui comprend par ailleurs un dispositif de mémoire dans lequel est stockée une famille de caractéristiques et qui est conçu pour définir un gradient de température le long de la hauteur du corps de chauffe et pour évaluer, sur la base de la famille de caractéristiques stockée et du gradient de température défini, la position sur le corps de chauffe de la température centrale réelle.

3. Répartiteur de coûts de chauffage selon la revendication 2, qui est également conçu pour diriger un capteur de température infrarouge vers la position évaluée, sur le corps de chauffe, de la température centrale réelle, de sorte qu'il peut déterminer la température au niveau de cette position.

4. Répartiteur de coûts de chauffage selon l'une des revendications 1 à 3, qui est conçu pour évaluer la température centrale réelle du corps de chauffe sur la base de la famille de caractéristiques stockée et du gradient de température défini.

5. Répartiteur de coûts de chauffage selon l'une des revendications 1 à 4, comprenant un boîtier principal avec un capteur de température infrarouge pour définir la température ambiante, et avec au moins un capteur de température infrarouge supplémentaire à l'extérieur du boîtier principal, qui est conçu pour mesurer la température du corps de chauffe au niveau d'un point de mesure, étant précisé qu'il y a une liaison entre le boîtier principal et le ou les capteurs de température infrarouge supplémentaires, par l'intermédiaire d'un câble électrique et/ou d'une liaison radioélectrique.

6. Répartiteur de coûts de chauffage selon la revendication 5, dans lequel il est prévu dans le boîtier principal un capteur de température infrarouge qui est conçu pour mesurer la température du corps de chauffe au niveau d'un autre point de mesure.

7. Répartiteur de coûts de chauffage selon la revendication 5 ou 6, avec un premier boîtier secondaire pourvu d'un premier capteur de température infrarouge supplémentaire à l'extérieur du boîtier principal, et avec un second boîtier secondaire pourvu d'un second capteur de température infrarouge supplémentaire à l'extérieur du boîtier principal, les premier et second capteurs de température infrarouge étant reliés au boîtier principal par l'intermédiaire d'un câble électrique et/ou d'une liaison radioélectrique.

8. Répartiteur de coûts de chauffage selon la revendication 5 ou 6, avec
un premier boîtier secondaire pourvu d'une première sonde de température à l'extérieur du boîtier principal, comprenant en particulier un capteur à thermistor, à semiconducteur ou à oscillateur à quartz, et avec
un second boîtier secondaire pourvu d'une seconde sonde de température à l'extérieur du boîtier principal, comprenant en particulier un capteur à thermistor, à semiconducteur ou à oscillateur à quartz, et étant précisé que
les première et seconde sondes de température sont reliées au boîtier principal par l'intermédiaire d'un câble électrique et/ou d'une liaison radioélectrique.

9. Procédé pour définir la puissance thermique d'un corps de chauffe, comprenant les étapes qui consistent
à prévoir un répartiteur de coûts de chauffage ;
à prévoir une famille de caractéristiques ;
à fixer le répartiteur de coûts de chauffage prévu au corps de chauffe, en particulier dans la plage de 40% à 75%, de préférence dans la plage de 45% à 55% de la hauteur du corps de chauffe,
**caractérisé en ce que** le répartiteur de coûts de chauffage comprend un dispositif à thermomètre à rayonnement, en particulier un dispositif à capteur de température infrarouge ;
et par les étapes qui consistent
à déterminer la température du corps de chauffe au niveau d'au moins deux points de mesure à l'aide du dispositif à thermomètre à rayonnement du répartiteur de coûts de chauffage prévu ;
à déterminer la température ambiante à l'aide du dispositif à thermomètre à rayonnement du répartiteur de coûts de chauffage prévu ; et
à définir la surchauffe du corps de chauffe sur la base de la température déterminée au niveau des deux points de mesure, ou plus, et de la température ambiante déterminée ainsi que de la famille de caractéristiques prévue.

10. Procédé selon la revendication 9, comprenant par ailleurs la préparation des deux points de mesure, ou plus, sur le corps de chauffe grâce au bouclage de points correspondants sur le corps de chauffe et/ou à la préparation d'une feuille à caractéristiques d'émission prédéfinies au moins sur les deux points de mesure ou plus.

11. Procédé selon la revendication 9 ou 10, selon lequel à l'aide d'un dispositif à capteur de température infrarouge qui est prévu dans un boîtier principal du répartiteur de coûts de chauffage et d'un dispositif à capteur de température infrarouge supplémentaire prévu dans un composant éloigné qui est relié au boîtier principal, la température d'un corps de chauffe à convecteur est mesurée à deux endroits espacés horizontalement.

12. Procédé selon l'une des revendications 9 à 11, selon lequel le dispositif à thermomètre à rayonnement est étalonné sur le degré d'émission des points de mesure à mesurer.
